# EUROPÄISCHE PATENTSCHRIFT

(11) **EP 1 329 652 B1**
(45) Veröffentlichungstag und Bekanntmachung des Hinweises auf die Patenterteilung: **14.04.2010**
(21) Anmeldenummer: 03000924.5
(22) Anmeldetag: 16.01.2003
(51) Int. Cl.: F16J 15/34, F16J 15/22

(54) **Drehrohrofen mit ringförmig geschlossener Stirnenddichtung, ringförmig geschlossene Dichtung für einen Drehrohrofen sowie Verfahren zum Herstellen einer solchen Dichtung**
Rotary kiln with a ring shaped face seal, ring shaped seal for a rotary kiln and method for making such a seal
Four rotatif comportant un joint facial annulaire, joint annulaire pour four rotatif et méthode de fabrication d'un tel joint

(30) Priorität: 17.01.2002 DE 10201503
(43) Veröffentlichungstag der Anmeldung: 23.07.2003
(73) Patentinhaber: VTA Verfahrenstechnik und Automatisierung GmbH, 45899 Gelsenkirchen (DE)
(72) Erfinder: Raichle, Peter H., 46284 Dorsten (DE); Werner, Harry F., 45259 Essen (DE)
(74) Vertreter: Grosse - Schumacher - Knauer - von Hirschhausen

(56) Entgegenhaltungen:
- DE-A- 3 127 523
- DE-A- 4 035 129
- US-A- 5 804 316

## Beschreibung

Die Erfindung betrifft einen Drehrohrofen mit ringförmig geschlossener Stirndichtung, eine ringförmig geschlossene Dichtung für einen Drehrohrofen sowie ein Verfahren zum Herstellen einer solchen Dichtung gemäß den Oberbegriffen der Patentansprüche 1, 13 und 15.

Gattungsgemäße Drehrohröfen, Dichtungen und Verfahren sind im Stand der Technik bekannt.

Wegen der aus Drehrohröfen bei vielen chemischen Prozessen anfallenden Gase, welche nicht in die Umgebungsatmosphäre gelangen sollen, ist es erforderlich, den Spalt zwischen dem sich drehenden, beheizten Ofenrohr und den feststehenden Stirnenden, in welchen der Eintrag bzw. der Austrag des im Drehrohrofen zu behandelnden Gutes untergebracht ist, mit Dichtungsringen abzudichten. Diese Notwendigkeit und die bei ihrer praktischen Umsetzung auftretenden Probleme sind bereits in der DE 40 35 129 A1 mit Blick auf die sich am Dichtungsumfang ändernden Dichtungsspaltmaße beschrieben worden. Diesem Problem wurde mit selbstzentrierenden Dichtungsflächen, die formschlüssig miteinander im Eingriff stehen und dazu mit einer Profilierung ausgestattet sind, gelöst.

Da selbstzentrierende Dichtungen erheblichen Scherkräften widerstehen müssen, ist ihr Dichtungsverhalten im Vergleich zu elastischeren Dichtungsringen weniger zufriedenstellend.

Die Verwendung vergleichsweise elastischer Dichtungen erfordert eine mehrseitige Abstützung der Ringdichtung in einer Dichtungsnut, welche einen polygonen, in der Regel rechteckigen Querschnitt aufweist. Das Einlegen von Dichtungsringen in solche Dichtungsring-Aufnahmenuten ist nur bei sehr guter Maßhaltlichkeit des Dichtungsringes einigermaßen problemfrei möglich. Da gerade das Problem der Maßhaltigkeit solcher Dichtungsringe bisher nur höchst unbefriedigend gelöst werden konnte, hat man anstelle von ringförmig geschlossenen Dichtungen vorgefertigte endlose Dichtungsschnüre verwendet, die dem gewünschten Dichtungsumfang entsprechend auf Länge zugeschnitten wurden. Diese - nicht gattungsgemäßen - Dichtungsringe haben u. a. den Nachteil, daß ihr Dichtungsverhalten an der Stoßstelle in der Regel unbefriedigend ist. Außerdem treten an der Stoßstelle erhöhte Verschleißprobleme auf.

Bisherige Versuche, im Querschnitt polygone geschlossene Dichtungsringe, bestehend aus einem Kernring mit einer Stoßstelle sowie einer Umhüllung aus einem Endlosgeflecht zu verwenden, sind in der Praxis immer wieder daran gescheitert, daß die geschlossenen Dichtungsringe im Querschnitt und/oder im Umfang vom Sollmaß allzu häufig abweichen. Der damit verbundene Ausschuß war unverhältnismäßig hoch.

Lediglich bei Endlos-Dichtungsschnüren ist es zu einem gewissen Maße gelungen, die mechanische Festigkeit und insbesondere das Formhaltevermögen geflochtener Dichtungsschnüre zu verbessern. Hierzu werden in den Polygonecken entsprechend geeignete Fasern verarbeitet, indem die Flechtfäden, die zu den Polygonecken geführt werden aus einem anderen Material als diejenigen Flechtfäden bestehen, die zu den Mitten der Polygonflächen geführt werden. Zum Beispiel wurden gestreckte, mit Graphit imprägnierte PTFE-Garne in den Bereichen der Polygonflächenmitten verwendet und Aramid-Garne im Bereich der Polygonecken. Für größere Dichtungsquerschnitte, insbesondere solchen Dichtungen, die aus einem Kernmaterial und aus einer Umflechtung bestehen, und insbesondere für geschlossene Dichtungsringe führt auch diese Flechttechnik, wie sie z. B. in der EP 0 741 807 B1 beschrieben wird, nur bedingt zu dem gewünschten Ergebnis, und zwar allenfalls bis zu einer maximalen Betriebstemperatur von 300° C.

Hiervon ausgehend liegt der Erfindung liegt der Erfindung das Problem zugrunde, einen Endlosdichtungsring für Stirnwandenddichtungen von Drehrohröfen für alle Betriebstemperaturen, insbesondere aber für solche > 400° C so auszubilden, daß sie bei einfacher Montierbarkeit ein hohes Maß an Dichtigkeit gewährleisten. Gewünscht wird insbesondere eine geringe Querschnitts- und Durchmessertoleranz. Erfindungsgemäße Drehrohrofenstirnwandenddichtungen sollen nach Möglichkeit besonders verschleißarm sein und möglichst eine Standzeit haben, die den Wartungsintervallen des Drehrohrofens entsprechen.

Zur Lösung dieser Aufgabe wird ein Drehrohrofen mit den Merkmalen des Anspruchs 1, ein Dichtungsring mit den Merkmalen des Anspruchs 13 sowie ein Herstellungsverfahren mit den Merkmalen des Anspruchs 15 vorgeschlagen. Erfindungsgemäß ist demnach vorgesehen, einen Kernring mit einer gegen Zugbelastungen gesicherten Stoßstelle zu versehen und den Kernring durch eine Endlosumflechtung unter Aufbau des gewünschten Endquerschnittes zu umhüllen. Die Maßhaltigkeit und das Standzeitverhalten eines derartigen Dichtungsringes wird dadurch noch entscheidend verbessert, daß die Endlosumflechtung im Bereich ihrer Polygonkante parallel zur Ringumfangsrichtung sich erstreckende Formhaltefäden oder -fasern aufweist. Diese letztere Maßnahme ist auch für sich genommen, also unabhängig von der Stoßstellengestaltung von eigenständiger erfinderischer Qualität.

Erfindungsgemäße Dichtungsringe sind in einem bisher nicht realisierbaren Ausmaß langzeitbeständig und maßhaltig.

Es ist nun auf verschiedene Weise möglich, erfindungsgemäße Dichtungsringe für Drehrohröfen hinsichtlich ihrer Kernring- und Stoßstellengestaltung sowie hinsichtlich der Endlosummantelung weiter zu verbessern.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein bevorzugtes Ausführungsbeispiel des erfindungsgemäßen Drehrohrofens mit ringförmig geschlossener Stirnenddichtung, ringförmig geschlossene Dichtung für einen Drehrohrofen sowie Verfahren zum Herstellen einer solchen Dichtung dargestellt ist. In der Zeichnung zeigen:
- Fig. 1: einen erfindungsgemäßen geschlossenen Dichtungsring in Draufsicht;
- Fig. 2: denselben Dichtungsring im Axialschnitt (Schnitt entlang der Linie A-A gemäß Fig. 1);
- Fig. 3: von demselben Dichtungsring lediglich den Kernring in Axialschnittdarstellung (gemäß Schnitt A-A in Fig. 1);
- Fig. 4A: eine geflochtene Kernringschnur in Draufsicht;
- Fig. 4B: dieselbe Kernringschnur im Querschnitt;
- Fig. 5A-5C: die Stoßstelle des Kernrings nach Fig. 3 in drei verschiedenen Herstellungsstadien;
- Fig. 6A: von einem geschlossenen Dichtungsring einen kurzen Umfangsabschnitt in Seitenansicht;
- Fig. 6B: denselben geschlossenen Dichtungsring im Querschnitt, schematisiert sowie
- Fig. 6C: denselben geschlossenen Dichtungsring im Querschnitt, zum Teil schematisiert und
- Fig. 7a/b: von einem Drehrohrofen einen Ausschnitt aus einem Stirnende mit eingebautem geschlossenen Dichtungsring in Stirnansicht (Fig. 7a) und Axialanschnittansicht (Fig. 7b).

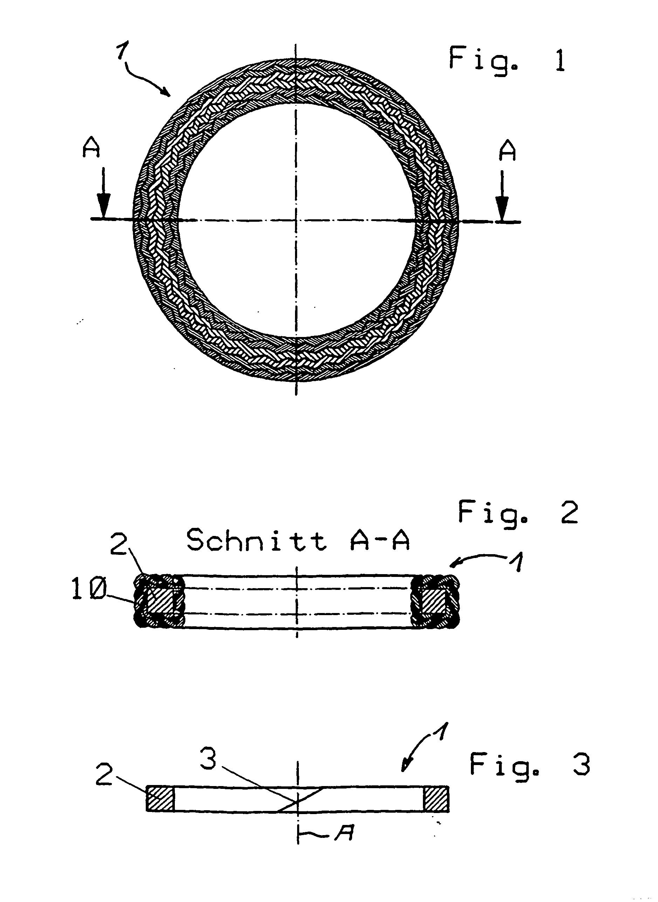

Der in Figur 1 in Draufsicht dargestellte Dichtring, von dem eine Außenansicht der äußeren Endlos-Umflechtungslage zu erkennen ist, besteht, wie aus Figuren 2 und 3 ersichtlich, aus einem Kernring 2 mit Stoßstelle 3 und einer als Endlosumflechtung 10 ausgeführten Umhüllung des Kernrings 2.

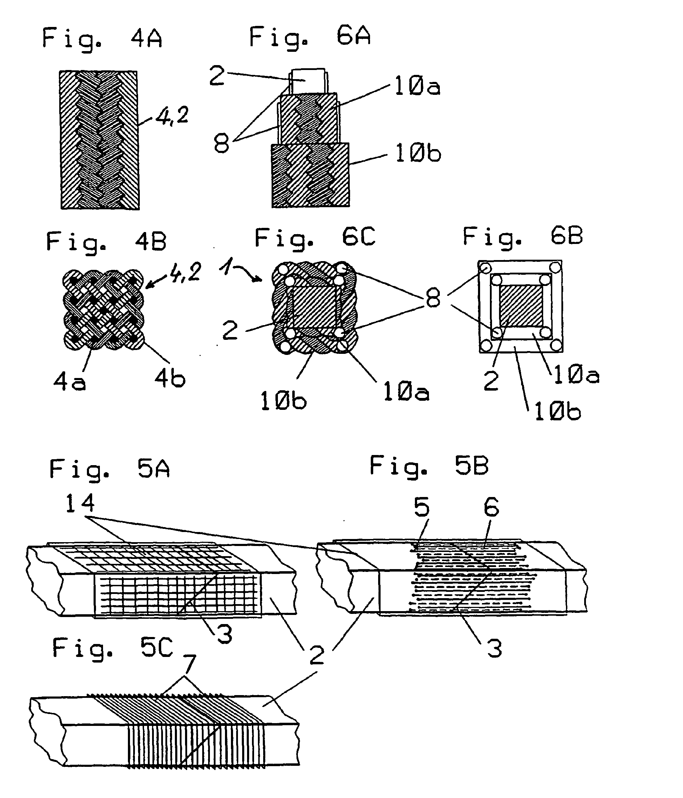

Wie im einzelnen den Figuren 4A und 4B zu entnehmen ist, kann es sich bei dem Material des Kernrings, welches zunächst als Endlosschnur vorliegt und der, vorzugsweise, bereits einen polygonen Querschnitt hat, um ein an sich bekanntes Geflecht handeln, welches aus längs verlaufenden Fasern 4A und diagonal verlaufenden Flechtfasern 4B besteht. In der Zeichnung dargestellt und insoweit bevorzugt ist eine sogenannte Vier-Track-Flechtung des Kernringmaterials. Da es für die Erfindung aber nicht auf die Machart des Kernmaterials ankommt, ist der Kernring in den übrigen Zeichnungen lediglich schematisiert, d. h. nicht als Geflecht dargestellt.

Aus den Figuren 5A bis 5C sind sechs Teilschritte zur Sicherung der Stoßstelle 3 des Kernrings 2 gegen Zugbelastungen ersichtlich: Die Stoßstelle 3 verläuft schräg, vorzugsweise unter 45°, zur Drehrohrachse A. Um ein Ausfransen der Schnittstellen zu vermeiden, können diese mit einem Klebstoff bestrichen werden. Für die Anwendung der Dichtung in einem Drehrohrofen eignet sich hierzu ein hochtemperaturbeständiger Kleber, wie er unter dem Handelsnamen PATEX vertrieben wird. Damit läßt sich die Stoßstelle auch verkleben. Zur Sicherung der Klebestelle kann diese mit einem, z. B. faserverstärkten Klebeband 14 durch Umwickeln der Stoßstelle fixiert werden (Fig. 5A). Sodann werden beidseitig der Stoßstelle 3 Zugentlastungsfäden 5, 6 verankert. Dies geschieht bevorzugt, und wie in Fig. 5B dargestellt, in der Weise, daß in Ringerstreckungsrichtung, d. h. in Umlaufrichtung verlaufende, insbesondere parallel zueinander angeordnete Nähfäden beidseitig der Stoßstelle 3 den Kernring 2, insbesondere rechtwinklig, durchdringen. Bei dem in Fig. 5B dargestellten Ausführungsbeispiel ist eine umlaufende Vernähung zwischen einander gegenüberliegenden Kernringflächen vorgesehen. Dabei sind die Zugentlastungsfäden in Doppellage angeordnet. Zunächst wird eine Lage von Carbonfasern 5, insbesondere aus doppelfädigem Kohlefasergarn in der zuvor beschriebenen Weise vernäht. Die bevorzugte Zugfestigkeit der Kohlefaserfäden liegt zwischen 800 und 1.400 N/m².

Sodann wird eine zweite (äußere) Lage von Zugentlastungsfäden 6, wiederum in der vorbeschriebenen Weise, vernäht. Diese bestehen vorzugsweise aus Aramid-Garn, dessen Zugfähigkeit vorzugsweise zwischen 2.000 und 2.900 Nm² je Faden liegt. - Auf diese Weise wird eine dem Kernringmaterial vergleichbare Zugfestigkeit im Stoßstellenbereich des Kernrings erzielt, so daß ein Kernring hoher Maßhaltigkeit entsteht. Bei einem praktischen Ausführungsbeispiel wurden Kernringe im Vier-Track-Verfahren mit großer Querschnittkonstanz von etwa 20 x 20 mm und einem Kernringaußendurchmesser von etwa 1,25 m hergestellt, welcher eine Toleranz von > gleich 0,5 % zum Solldurchmesser aufwies.

Um im Stoßstellenbereich Verdickungen zu vermeiden, wurden die Zugentlastungsfäden 5, 6 nach dem Vernähen mit Kohlefasergarn (Vernähungsumwicklung 7) umwickelt. Hierdurch wird auch die Zugfestigkeit der Zugentlastung erhöht.

Im übrigen erfolgte die Vernähung der Zugentlastungsfäden unter hohem Zug, wobei z. B. 10 Fäden horizontal und 10 Fäden vertikal durch das Kernmaterial bzw. entlang desselben verlaufen. Die zweite Vernähung mit Aramid-Garn führt bei üblichen Anwendungstemperaturen, d. h. oberhalb 300° Celsius zu einer zusätzlichen Stoßverklebung durch Schmelzen des Aramid-Garns.

Der so hergestellte geschlossene Kernring wird anschließend im Endlosverfahren umflochten. Dadurch erhält der Dichtungsquerschnitt das gewünschte Endmaß. Trotz dieser Umflechtung, bei der die Flechtfäden notwendigerweise diagonal zum Dichtungsumfang verlaufen, treten keine Dehnungen auf und bleibt der Kernring maßhaltig. Die beiden Umflechtungslagen sind in Figuren 6A bis 6C mit 10a und 10b bezeichnet. Entlang der Polygonecken werden Formhaltefäden oder -fasern 8 gespannt. Diese werden zusammen mit dem Kernring bzw. mit einer bereits erfolgten Umflechtung 10A von der nachfolgenden Endlosumflechtung mit umspannt. Dabei wird vorzugsweise eine Zugkraft auf die Formhaltefäden ausgeübt, die höher als die Zugkraft ist, die auf die Flechtfäden einwirkt. In Figuren 6B und 6C ist die Lage und der Querschnitt der Formhaltefäden 8 der Übersichtlichkeit halber lediglich schematisch dargestellt. Durch die Formhaltefäden wird der gewünschte polygone Querschnitt bei der Endlosumflechtung aufrechterhalten und die Umflechtung zugverstärkt. Insgesamt wurde auf diese Weise erreicht, daß nicht nur die durch die Umflechtung entstehenden Sollquerschnitte mit hoher Genauigkeit eingehalten werden, sondern auch der Dichtungsringdurchmesser hält die weiter oben genannte Toleranz von > gleich 0,5 % ein.

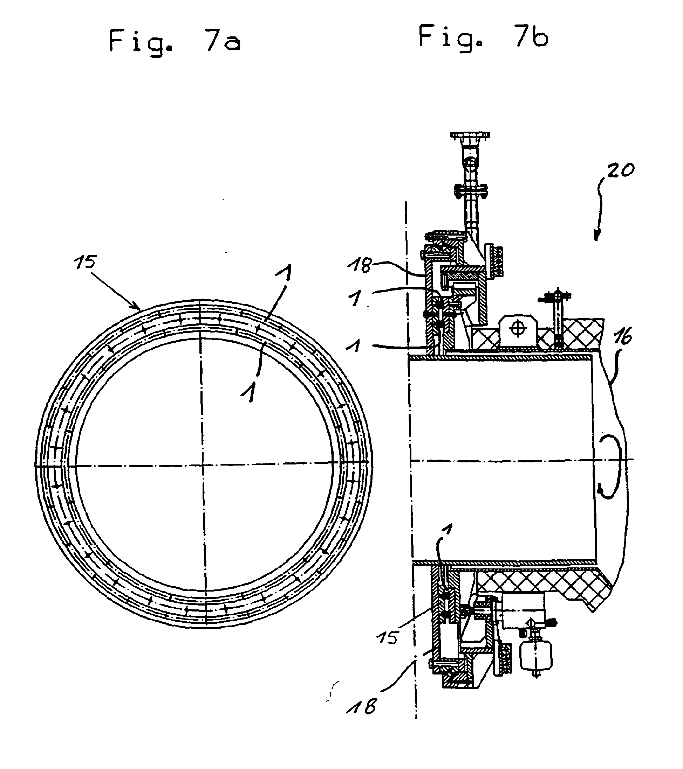

Aus Figur 7a/b ist das drehangetriebene Drehrohr 16 eines ansich bekannten Drehrohrofens 20 ersichtlich, an dessen linker sich mitdrehender Stirnendfläche zwei erfindungsgemäße geschlossene Dichtungsringe 1 in koaxialer und koplanarer Anordnung anliegen, welche in querschnittangepaßten Kreisnuten eines Dichtungstragrings 15 an einer feststehenden Stirnwand 18 drehfest gehalten werden.

Insgesamt wird durch die Erfindung ein Dichtungsring für Drehrohröfen mit hoher Maßhaltigkeit und Verschleißarmut bereitgestellt.

Zur Verbesserung der Maßhaltigkeit kann zwischen einzelnen Arbeitsschritten eine Kalandrierung des Dichtungsrings erfolgen. Die Umflechtungsfasern werden am Ende mit der vorhandenen Umflechtung verspleist, um Querschnittsunterschiede so gering wie möglich zu halten.

### Bezugszeichenliste

- 1: geschlossener Dichtungsring
- 2: Kernring
- 3: Stoßstelle
- 4: Flechtung
- 4a: Längsfasern
- 4b: Flechtfasern
- 5: Zugentlastungsfäden
- 6: Zugentlastungsfäden
- 7: Vernähungsumwicklung
- 8: Formhaltefäden
- 10: Endlosumflechtung
- 10a: erste Flechtlage
- 10b: zweite Flechtlage
- 14: Fixierband
- 15: Dichtungstragring
- 16: Drehrohr
- 18: Stirnwand
- 20: Drehrohrofen

## Patentansprüche

1. Drehrohrofen mit mindestens einer ringförmig geschlossenen Stimenddichtung zwischen dem Drehrohr (16) und feststehenden Stirnwänden (18),
bei dem der mindestens eine geschlossene Dichtungsring aus einem im Querschnitt polygonen, vorzugsweise rechteckigen, Kemring (2) mit Stoßstelle (3) und aus einer als Endlosumflechtung (10) ausgeführten Umhüllung des Kernrings besteht,
**dadurch gekennzeichnet,**
**daß** der Kernring (2) im Bereich der Stoßstelle (3) geschlossen und durch miteinander verbinden seiner Enden gegen Zugbelastungen gesichert ist.

2. Drehrohrofen nach Anspruch 1, **dadurch gekennzeichnet, daß** die Stoßstelle durch in Ringumfangsrichtung sich erstreckende, beidseitig der Stoßstelle verankerte Zugentlastungsfäden (5, 6) oder -fasern zuggesichert ist.

3. Drehrohrofen nach Anspruch 1 oder 2, **dadurch gekennzeichnet, daß** die Stoßstelle verklebt ist.

4. Drehrohrofen nach einem der Ansprüche 1 bis 3, **dadurch gekennzeichnet, daß** die Zugsicherung der Stoßstelle des Kernrings durch in Ringumfangsrichtung, insbesondere untereinander parallel, verlaufende Nähfäden, die den Kernring (2) beidseitig der Stoßstelle (3) durchdringen, gebildet ist.

5. Drehrohrofen nach einem der Ansprüche 2 bis 4, **dadurch gekennzeichnet, daß** die Zugentlastungsfäden (5) aus, insbesondere doppelfädigem, Kohlefasergarn, vorzugsweise mit einer Zugfestigkeit von 800 bis 1400 N/m² je Faden, bestehen.

6. Drehrohrofen nach einem der Ansprüche 1 bis 5, **dadurch gekennzeichnet, daß** die Zugentlastungsfäden (5, 6) in Doppellage angeordnet sind.

7. Drehrohrofen nach Anspruch 6, **dadurch gekennzeichnet, daß** die Zugentlastungsfäden (6) der äußeren (zweiten) Lage aus Aramid-Gam besteht, vorzugsweise mit einer Zugfestigkeit von 2000 bis 2.900 N/m² je Faden.

8. Drehrohrofen nach einem der Ansprüche 1 bis 7, **dadurch gekennzeichnet, daß** die Endlosumflechtung (10) im Bereich der Polygonkanten parallel zur Ringumfangsrichtung sich erstreckende, insbesondere verstärkende, Formhaltefäden (8) oder -fasern aufweist.

9. Drehrohrofen nach einem der Ansprüche 1 bis 8, **dadurch gekennzeichnet, daß** die Endlosumflechtung (10) zweilagig ist.

10. Drehrohrofen nach einem der Ansprüche 1 bis 9, **dadurch gekennzeichnet, daß** die Faden- oder Faserenden der Endlosumflechtung (10) mit der Umflechtung verspleist werden.

11. Drehrohrofen nach einem der Ansprüche 1 bis 10, **dadurch gekennzeichnet, daß** die Stoßfläche des Kernrings (2) zur Drehrohrachse schräg, unter vorzugsweise 45° verläuft.

12. Drehrohrofen nach einem der Ansprüche 1 bis 11, **dadurch gekennzeichnet, daß** der Kernringquerschnitt zumindest im Umfangsbereich der Zugentlastungsfäden (5, 6) zusammen mit den Zugentlastungsfäden, insbesondere mit Carbonfasergam (7), umwickelt ist.

13. Ringförmig geschlossene Dichtung für die Stimenddichtung eines Drehrohrofens (20) zwischen dem Drehrohr (16) und feststehenden Stirnwänden (18), bestehend aus einem im Querschnitt polygonen, vorzugsweise rechteckigen, Kernring mit Stoßstelle und aus einer als Endlosumflechtung ausgeführten Umhüllung des Kernrings,
**dadurch gekennzeichnet,**
**daß** die Stoßstelle (3) des Kernrings (2) verklebt und durch in Ringumfangsrichtung sich erstreckende, beidseitig der Stoßstelle verankerte Zugentlastungsfäden (5, 6) oder -fasern zuggesichert ist.

14. Dichtungsring nach Anspruch 13, **dadurch gekennzeichnet, daß** er die kennzeichnenden Merkmale eines oder mehrerer der Ansprüche 2 bis 10 aufweist.

15. Verfahren zum Herstellen eines ringförmig geschlossenen Dichtungsringes bestehend aus einem im Querschnitt polygonen Kemring mit Stoßstelle und einer als Endlosumflechtung ausgeführten Umhüllung des Kernrings, **dadurch gekennzeichnet, daß** die Stoßstelle des Kernrings zunächst verklebt wird und anschließend Zugentlastungsfäden oder -fasern in Ringumfangsrichtung über die Stoßstelle gespannt und beidseitig der Stoßstelle mit dem Kernring vernäht werden.

16. Verfahren nach Anspruch 15, **dadurch gekennzeichnet, daß** als Kernring ein im Querschnitt polygones Fasergeflecht, insbesondere aus längsverlaufenden umflochtenen Kohlefasern, verwendet wird.

17. Verfahren nach Anspruch 15 oder 16, **dadurch gekennzeichnet, daß** die Verklebung der Stoßstelle durch Umwickeln mit einer/einem, insbesondere faserverstärkten, Folie oder Klebeband lagefixiert wird.

18. Verfahren nach einem der Ansprüche 15 bis 17, **dadurch gekennzeichnet, daß** der Dichtungsring und ggf. auch das Vormaterial des Kernrings, nach mindestens einem der Herstellungsschritte einem querschnittgebenden Verformungsschritt oder Formerhaltungsschritt, ggf. unter gleichzeitiger Verdichtung, z. B. durch Kalandrieren, unterzogen wird.

19. Verfahren nach einem der Ansprüche 15 bis 18, **dadurch gekennzeichnet, daß** in die Endlosumflechtung im Bereich der Polygonkanten Formhaltefäden oder -fasern in Ringumfangsrichtung sich erstreckend eingearbeitet werden.

20. Verfahren nach Anspruch 19, **dadurch gekennzeichnet, daß** die Formhaltefäden innerhalb des Endlosgeflechts angeordnet werden.

21. Verfahren nach Anspruch 19 oder 20, **dadurch gekennzeichnet, daß** die Formhaltefäden aus Carbonfasern, insbesondere mit einer Festigkeit > 1.400 N/m² bestehen.

22. Verfahren nach einem der Ansprüche 19 bis 21, **dadurch gekennzeichnet, daß** die Formhaltefäden während des Umflechtens unter höherer Zugspannung gehalten werden als die Flechtfäden.

## Claims

1. A rotary furnace with at least one annular, enclosed, front-end gasket between the rotating drum (16) and rigid front walls (18),
wherein the at least one enclosed gasket ring consists of a cross-sectionally polygonal, preferably rectangular, core ring (2), with a butt joint (3) and of a covering of the core ring designed as an endless braid (10),
**characterised in that**
the core ring (2) in the region of the butt joint (3) is enclosed and secured against tensile strain by a mutual connection of its ends.

2. The rotary furnace according to claim 1,
**characterised in that**
the butt joint is secured against tensile strain by strain-relief threads (5, 6) or fibres extending in the circumferential direction of the ring, anchored on both sides of the butt joint.

3. The rotary furnace according to claim 1 or 2,
**characterised in that**
the butt joint is glued.

4. The rotary furnace according to any one of claims 1 to 3,
**characterised in that**
the strain-relief of the butt joint of the core ring is provided by stitching threads extending, in particular, in a mutually parallel manner, in the circumferential direction of the ring, which penetrate the core ring (2) on both sides of the butt joint (3).

5. The rotary furnace according to any one of claims 2 to 4,
**characterised in that**
the strain-relief threads (5) consist of carbon fibre yarn, especially double-threaded, preferably with a tensile strength of 800 to 1400 N/m² per thread.

6. The rotary furnace according to any one of claims 1 to 5,
**characterised in that**
the strain-relief threads (5, 6) are arranged in a double layer.

7. The rotary furnace according to claim 6,
**characterised in that**
the strain-relief threads (6) of the outer (second) layer consist of aramid yarn, preferably with a tensile strength from 2000 to 2900 N/m² per thread.

8. The rotary furnace according to any one of claims 1 to 7,
**characterised in that**
the endless braid (10) provides, in particular, reinforcing, form-holding threads (8) or fibres extending parallel to the circumferential direction of the ring in the region of the polygonal edges.

9. The rotary furnace according to any one of claims 1 to 8,
**characterised in that**
the endless braid (10) is double-layered.

10. The rotary furnace according to any one of claims 1 to 9,
**characterised in that**
the thread or fibre ends of the endless braid (10) are spliced with the braid.

11. The rotary furnace according to any one of claims 1 to 10,
**characterised in that**
the abutting surface of the core ring (2) extends diagonally to the axis of the rotating drum, preferably at 45°.

12. The rotary furnace according to any one of claims 1 to 11,
**characterised in that**
the cross-section of the core ring is wrapped, at least in the circumferential region of the strain-relief threads (5, 6), together with the strain-relief threads, in particular, with carbon fibre yarn (7).

13. An annular, enclosed gasket for the front-end sealing of a rotary furnace (20) between the rotating drum (16) and the rigid front walls (18), consisting of a cross-sectionally polygonal, preferably rectangular, core ring with a butt joint and of a covering of the core ring designed as an endless braid,
**characterised in that**
the butt joint (3) of the core ring (2) is glued and secured against tensile strain by strain-relief threads (5, 6) or fibres extending in the circumferential direction of the ring, anchored on both sides of the butt joint.

14. The gasket ring according to claim 13,
**characterised in that**
it provides the characterising features of one or more of claims 2 to 10.

15. A method for the manufacture of an annular, enclosed gasket ring consisting of a cross-sectionally polygonal core ring, with a butt joint and a casing of the core ring designed as an endless braid,
**characterised in that**
the butt joint of the core ring is initially glued, and the strain-relief threads or fibres are then stretched in the circumferential direction of the ring over the butt joint and stitched to the core ring on both sides of the butt joint.

16. The method according to claim 15,
**characterised in that**
a cross-sectionally polygonal woven fibre structure, especially made of Ion-gitudinally extending, braided carbon fibres, is used as the core ring.

17. The method according to claim 15 or 16,
**characterised in that**
the gluing of the butt joint is fixed in position by wrapping with an, especially fibre-reinforced, foil or adhesive tape.

18. The method according to any one of claims 15 to 17,
**characterised in that**
the gasket ring and optionally also the starting material of the core ring, is subjected, after at least one of the manufacturing steps, to a cross-section-determining forming step or form-preserving step, optionally with simultaneous compression, for example, through calendaring.

19. The method according to any one of claims 15 to 18,
**characterised in that**
form-holding threads or fibres extending in the circumferential direction of the ring are worked into the endless braid in the region of the polygonal edges.

20. The method according to claim 19,
**characterised in that**
the form-holding threads are arranged within the endless braid.

21. The method according to claim 19 or 20,
**characterised in that**
the form-holding threads consist of carbon fibres, in particular, with a strength > 1400 N/m².

22. The method according to any one of claims 19 to 21,
**characterised in that,**
during the braiding, the form-holding threads are held under a higher tension than the braiding threads.

## Revendications

1. Four tubulaire tournant comportant au moins un joint frontal annulaire fermé entre le tube tournant (16) et les parois frontales fixes (18), selon lequel
au moins ce joint annulaire fermé se compose d'un anneau de base (2), de section polygonale de préférence rectangulaire avec des surfaces de jonction (3) ainsi que d'une gaine réalisée sous la forme d'une tresse périphérique sans fin (10),
**caractérisé en ce que**
l'anneau de base (2) est fermé dans la zone des surfaces de jonction (3) et il est protégé contre les contraintes de traction par la réunion de ses extrémités.

2. Four tubulaire tournant selon la revendication 1,
**caractérisé en ce que**
les surfaces de jonction sont protégées en traction par des fils de reprise de traction (5, 6) ou de fibres s'étendant dans la direction périphérique annulaire et accrochés des deux côtés des surfaces de jonction.

3. Four tubulaire tournant selon la revendication 1 ou 2,
**caractérisé en ce que**
la surface de jonction est collée.

4. Four tubulaire tournant selon l'une des revendications 1 à 3,
**caractérisé en ce que**
la protection en traction de la surface de jonction de l'anneau de base est réalisée par des fils de couture dirigés dans la direction périphérique annulaire, notamment parallèles entre eux et qui traversent l'anneau de base (2) des deux côtés de la surface de jonction (3).

5. Four tubulaire tournant selon l'une des revendications 2 à 4,
**caractérisé en ce que**
les fils de reprise de traction (5) sont notamment des doubles fils de fibres de carbone ayant de préférence une résistance à la traction comprise entre 800 et 1400 N/m² par fil.

6. Four tubulaire tournant selon l'une des revendications 1 à 5,
**caractérisé en ce que**
les fils de reprise de traction (5, 6) sont prévus en une double couche.

7. Four tubulaire tournant selon la revendication 6,
**caractérisé en ce que**
les fils de reprise de traction (6) de la couche extérieure (seconde couche) sont des fils d'aramide de préférence avec une résistance à la traction comprise entre 2000 et 2900 N/m² par fil.

8. Four tubulaire tournant selon l'une des revendications 1 à 7,
**caractérisé en ce que**
le tressage périphérique sans fin (10) comporte, dans la zone des arêtes du polygone, des fibres ou des fils de maintien de forme (8), parallèles à la direction périphérique annulaire et notamment des fils de renforcement.

9. Four tubulaire tournant selon l'une des revendications 1 à 8,
**caractérisé en ce que**
le tressage périphérique sans fin (10) est à deux couches.

10. Four tubulaire tournant selon l'une des revendications 1 à 9,
**caractérisé en ce que**
les extrémités de fils ou de fibres du tressage périphérique sans fin (10) sont intégrées dans le tressage.

11. Four tubulaire tournant selon l'une des revendications 1 à 10,
**caractérisé en ce que**
la surface d'assemblage de l'anneau de base (2) est inclinée par rapport à l'axe du tube du four, de préférence à 45°.

12. Four tubulaire tournant selon l'une des revendications 1 à 11,
**caractérisé en ce que**
la section de l'anneau de base, au moins dans la zone périphérique des fils de reprise de traction (5, 6), est enroulée de fils de reprise de traction, notamment à fibres de carbone (7).

13. Joint annulaire fermé pour le joint frontal d'un four tubulaire tournant (20), entre le four tubulaire tournant (16) et les parois frontales fixes (18), composé d'un anneau de base à section polygonale de préférence rectangulaire avec des surfaces de jonction et une enveloppe de l'anneau de base réalisée sous la forme d'un tressage périphérique sans fin,
**caractérisé en ce que**
la surface de jonction (3) de l'anneau de base (2) est collée et elle est protégée en traction par des fibres ou des fils de décharge en traction (5, 6), s'étendant dans la direction périphérique annulaire et qui sont accrochés des deux côtés de la surface de jonction.

14. Joint d'étanchéité selon la revendication 13,
**caractérisé en ce qu'**
il comporte les caractéristiques de l'une des revendications 2 à 10.

15. Procédé de fabrication d'un joint d'étanchéité annulaire fermé composé d'un noyau de base de section polygonale avec des surfaces de jonction et une gaine de l'anneau de base, réalisée sous la forme d'un tressage périphérique sans fin,
**caractérisé en ce que**
la surface de jonction de l'anneau de base est tout d'abord collée et ensuite, les fibres ou fils de reprise de traction, sont tendus dans la direction périphérique par-dessus la surface de jonction et sont cousus à l'anneau de base des deux côtés de la surface de jonction.

16. Procédé selon la revendication 15,
**caractérisé en ce que**
l'anneau de base est un tressage de fibres à section polygonale, notamment de fibres de carbone non tressées, dirigées longitudinalement.

17. Procédé selon la revendication 15 ou 16,
**caractérisé en ce que**
le collage de la surface de jonction est bloqué par l'enroulement à l'aide d'un film ou d'un ruban adhésif, notamment renforcé par des fibres.

18. Procédé selon les revendications 15 à 17,
**caractérisé en ce que**
le joint d'étanchéité, le cas échéant également, la matière première de l'anneau de base sont soumis au moins à une étape de fabrication, à une étape de mise en forme donnant la section ou à une étape de maintien de forme, le cas échéant avec compression simultanée, par exemple par calandrage.

19. Procédé selon l'une des revendications 15 à 18,
**caractérisé en ce que**
le tressage périphérique sans fin est intégré dans la zone des fils ou des fibres de maintien de forme des arêtes polygonales, en s'étendant dans la direction périphérique annulaire.

20. Procédé selon la revendication 19,
**caractérisé en ce que**
les fils de maintien de forme sont installés dans le tressage sans fin.

21. Procédé selon la revendication 19 ou 20,
**caractérisé en ce que**
les fils de maintien de forme sont des fibres de carbone, offrant notamment une tenue supérieure à 1400 N/m².

22. Procédé selon les revendications 19 à 21,
**caractérisé en ce que**
les fils de maintien de forme sont tenus pendant le tressage sous une tension plus élevée que celle des fils de tressage.
